# EUROPEAN PATENT APPLICATION

(11) **EP 4 216 361 A1**
(43) Date of publication of application: **26.07.2023**
(21) Application number: 23152651.8
(22) Date of filing: 20.01.2023
(51) Int. Cl.: H01M 50/536, H01M 50/107, H01M 50/548, H01M 50/179

(54) **SECONDARY BATTERY**

(30) Priority: 20.01.2022 KR 20220008442
(71) Applicant: Samsung SDI Co., Ltd., Yongin-si, Gyeonggi-do 17084 (KR)
(72) Inventor: JUNG, Hyun Ki, 17084 Yongin-si (KR)
(74) Representative: Marks & Clerk LLP

(57) **Abstract**

The present disclosure relates to a secondary battery, and a technical problem to be solved is to prevent separation of a welding region between an electrode assembly and a current collector plate or separation of a welding region between a current collector plate and a can when vibration or impact is applied. To this end, disclosed is a secondary battery including: an electrode assembly; a case that accommodates the electrode assembly; a cap plate seals the case; and at least one current collector plate welded to at least one of between the electrode assembly and the case and between the electrode assembly and the cap plate, wherein at least one slit is formed in the current collector plate.

## Description

### BACKGROUND

### 1. Field

An embodiment of the present disclosure relates to a secondary battery.

### 2. Description of the Related Art

Lithium ion secondary batteries are used as power sources for portable electronic devices as well as hybrid vehicles or electric vehicles because of, for example, a high operating voltage thereof and high energy density per unit weight.

Such secondary batteries may be classified into cylindrical, prismatic, or pouch-shaped shapes according to the shape. Specifically, a cylindrical secondary battery generally includes a cylindrical electrode assembly, a cylindrical can to which the electrode assembly is coupled, an electrolyte injected into the inside of the can to enable the movement of lithium ions, and a cap assembly coupled to one side of the can to prevent leakage of the electrolyte and to prevent separation of the electrode assembly.

The above information disclosed in this Background section is only for enhancement of understanding of the background of the disclosure and therefore it may contain information that does not constitute prior art.

### SUMMARY

An embodiment of the present disclosure provides a secondary battery capable of preventing separation of a welding region between an electrode assembly and a current collector plate or separation of a welding region between a current collector plate and a can when vibration or impact is applied.

A secondary battery according to an embodiment of the present disclosure includes: an electrode assembly; a case that accommodates the electrode assembly; a cap plate that seals the case; and at least one current collector plate that is welded to at least one of between the electrode assembly and the case and between the electrode assembly and the cap plate, wherein at least one slit is formed in each of the current collector plates.

The slit may be C-shaped or U-shaped.

The current collector plate may include: a disc-shaped body; and an electrode welding portion that is partitioned inside the body through the slit and is welded to the electrode assembly.

The electrode welding portion may be separated from the central region of the body of the current collector plate by the slit to be movable.

The electrode assembly may be welded to the inside of the electrode welding portion partitioned by the slit.

The slit may include a plurality of slits, which are arranged at a certain angle with respect to the center of the current collector plate.

The slit may include an even number of slits, which are arranged to be symmetrical with respect to the center of the current collector plate.

The edge of the body and the electrode welding portion may be maintained at a connected state.

The case may accommodate the electrode assembly through an opening, may have a hole on a surface facing the opening, and may further include a first terminal electrically coupled to the current collector plate through the hole of the case.

The first terminal may include a head part positioned outside the case and a fastening part that is welded and coupled to the central region of the current collector plate through the hole of the case.

At least some of the above and other features of the invention are set out in the claims.

### BRIEF DESCRIPTION OF DRAWINGS

FIG. 1 is a perspective view illustrating a cylindrical secondary battery according to an embodiment of the present disclosure.
FIG. 2 is a cross-sectional view of the cylindrical secondary battery shown in FIG. 1.
FIG. 3 is a cut-away perspective view illustrating a portion of a secondary battery according to an embodiment of the present disclosure.
FIGS. 4A and 4B are perspective views illustrating a welding region and a stress direction of a current collector plate in a secondary battery according to an embodiment of the present disclosure.
FIG. 5 is an enlarged cross-sectional view illustrating a portion of the cylindrical secondary battery of FIG. 2.

### DETAILED DESCRIPTION

Hereinafter, preferred embodiments of the present disclosure will be described in detail with reference to the accompanying drawings.

Embodiments of the present disclosure are provided to more fully describe the present disclosure to those skilled in the art, and the following embodiments may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure.

As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

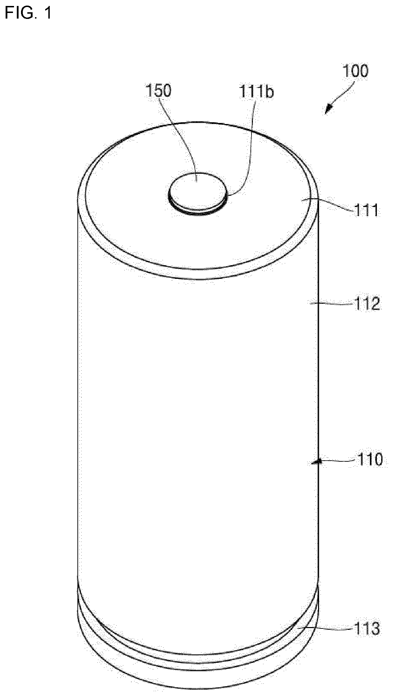

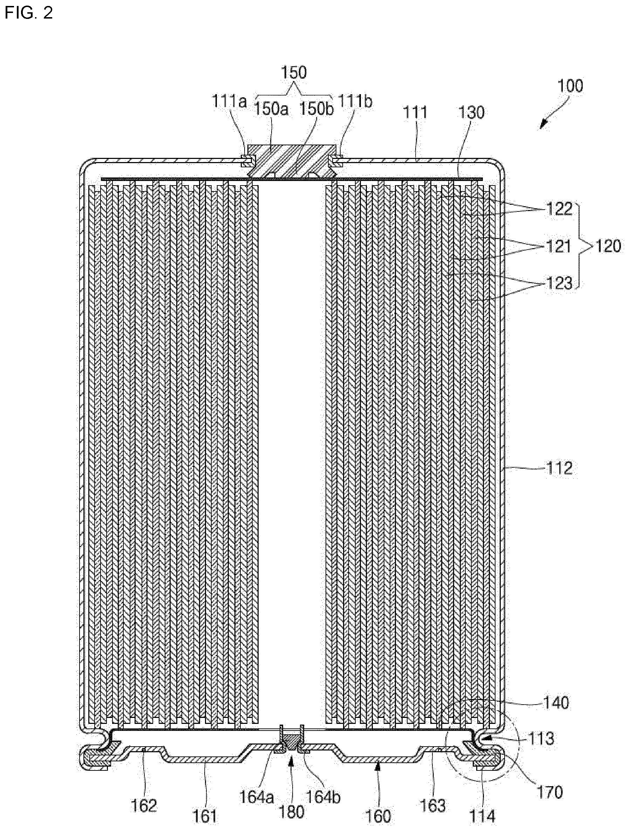

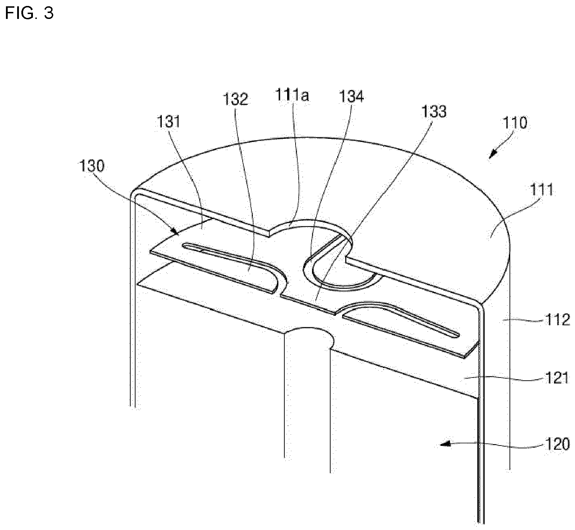

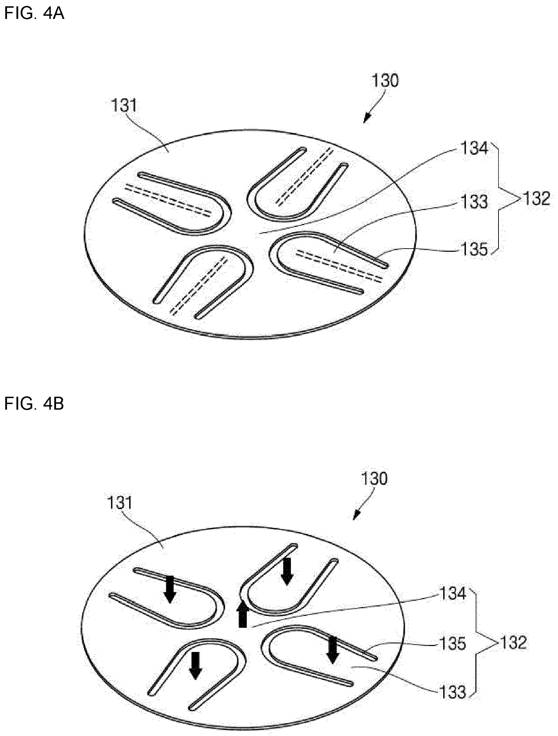

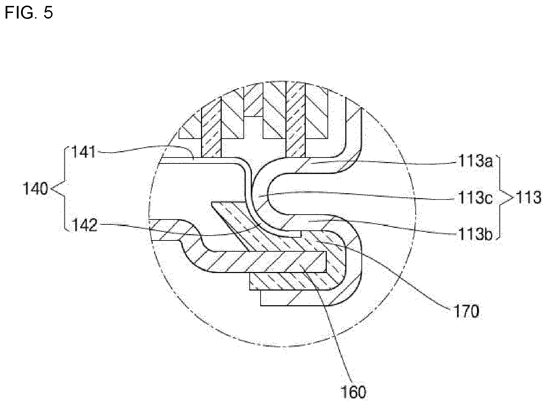

FIG. 1 is a perspective view illustrating a cylindrical secondary battery according to an embodiment of the present disclosure. FIG. 2 is a cross-sectional view of the cylindrical secondary battery shown in FIG. 1. FIG. 3 is a cut-away perspective view illustrating a portion of a secondary battery according to an embodiment of the present disclosure. FIGS. 4A and 4B are perspective views illustrating a welding region and a stress direction of a current collector plate in a secondary battery according to an embodiment of the present disclosure. FIG. 5 is an enlarged cross-sectional view illustrating a portion of the cylindrical secondary battery of FIG. 2.

As illustrated in FIGS. 1 to 3, the secondary battery 100 according to the present disclosure may include a cylindrical can 110, an electrode assembly 120 accommodated inside the cylindrical can 110, a rivet terminal 150 coupled to a terminal hole provided at one end of the cylindrical can 110, a cap plate 160 sealing an opening at the other end of the cylindrical can 110, and a vent terminal 180 coupled to a vent hole 164a provided at a portion of the cap plate 160.

The cylindrical can 110 includes a circular upper surface portion 111 and a side surface portion 112 extending a constant length downward from an edge of the upper surface portion 111. The upper surface portion 111 and the side portion 112 of the cylindrical can 110 may be integrally formed.

The circular upper surface portion 111 may be in a flat circular plate shape and may have a terminal hole 111a penetrating the center thereof. The upper surface portion 111 may be coupled by inserting the rivet terminal 150 into the terminal hole 111a. A first gasket 111b for sealing and electrical insulation may be further interposed between the terminal hole 111a and the rivet terminal 150. The first gasket 111b may electrically separate the rivet terminal 150 and the cylindrical can 110 from each other by preventing the rivet terminal 150 and the cylindrical can 110 from contacting each other. The terminal hole 111a of the upper surface portion 111 of the cylindrical can 110 may be sealed by the first gasket 111b. The first gasket 111b may be made of a resin material, such as polyethylene (PE), polypropylene (PP), or polyethylene terephthalate (PET).

During the manufacturing process of the cylindrical secondary battery 100, the lower part of the cylindrical can 110 is opened. Therefore, in the cylindrical secondary battery 100, during the manufacturing process, the electrode assembly 120 and the electrolyte may be inserted through the open lower part of the cylindrical can 110. Here, the electrode assembly 120 may be inserted into the cylindrical can 110 in a state in which the open lower part thereof faces upward. After the electrode assembly 120 is inserted into the cylindrical can 110, the cap plate 160 is coupled to the opened lower end. In addition, after the electrolyte is inserted into the cylindrical can 110 through the vent hole 164a formed in the cap plate 160, the cylindrical can 110 may seal the inside of the cylindrical can 110 by coupling the vent terminal 180 to the vent hole 164a. Here, the electrolyte serves to enable movement of lithium ions between the positive electrode plate 121 and the negative electrode plate 122 forming the electrode assembly 120. The electrolyte may be a non-aqueous organic electrolyte solution that is a mixture of a lithium salt and a high-purity organic solvent. In addition, the electrolyte may be a polymer using a polymer electrolyte or a solid electrolyte, but the type of electrolyte is not limited thereto.

The cylindrical can 110 may be made of steel, a steel alloy, aluminium, an aluminium alloy, or an equivalent thereof, but the material is not limited thereto. In addition, in the cylindrical can 110, in order to prevent the electrode assembly 120 from escaping to the outside, an inwardly recessed beading part 113 may be formed on an upper portion of the cap plate 160, and a crimping part 114 may be formed on a lower portion of the cap plate 160.

After the electrode assembly 120 is inserted through the open lower end of the cylindrical can 110, the beading part 113 is formed to prevent the electrode assembly 120 from being separated from the cylindrical can 110. The beading part 113 includes an upper flat part 113a and a lower flat part 113b that are substantially parallel to the upper surface portion 111, and a connecting part 113c that connects the upper flat part 113a and the lower flat part 113b to each other. The outer surfaces of the upper flat part 113a and the lower flat part 113b may face each other. Here, the outer surfaces may be outer surfaces of the cylindrical can 110.

An edge of the lower surface of the electrode assembly 120 may be seated on the upper flat part 113a of the beading part 113. That is, the edge of the lower surface of the electrode assembly 120 may contact the upper surface of the upper flat part 113a of the beading part 113.

The electrode assembly 120 includes a positive electrode plate 121 coated with a positive electrode active material, a negative electrode plate 122 coated with a negative electrode active material, and a separator 123 interposed between the positive electrode plate 121 and the negative electrode plate 122 to prevent a short circuit therebetween and allows only the movement of lithium ions. After the positive electrode plate 121, the negative electrode plate 122, and the separator 123 are stacked, the electrode assembly 120 is wound from the winding end to have a substantially cylindrical shape. In addition, in the electrode assembly 120, a positive electrode uncoated portion to which a positive electrode active material is not applied may protrude from the positive electrode plate 121 in an upward direction, and a negative electrode uncoated portion to which a negative electrode active material is not applied may protrude downward from the negative electrode plate 122.

The positive electrode plate 121 has a positive electrode active material made of a transition metal oxide coated on at least one surface of a positive electrode current collector plate, which is a plate-shaped metal foil made of aluminium (Al). In addition, the positive electrode plate 121 may have a positive electrode uncoated portion without a positive electrode active material coated on an upper portion thereof. The positive electrode uncoated portion may protrude upward from the electrode assembly 120. That is, the positive electrode uncoated portion of the positive electrode plate 121 may protrude more upward than the negative electrode plate 122 and the separator 123.

The negative electrode plate 122 has a negative electrode active material such as graphite or carbon coated on at least one surface of a negative electrode current collector plate, which is a plate-shaped metal foil made of copper (Cu) or nickel (Ni). In addition, the negative electrode plate 122 may have a negative electrode uncoated portion without a negative electrode active material coated on an upper portion thereof. The negative electrode uncoated portion may protrude downward from the electrode assembly 120. That is, the negative electrode uncoated portion of the negative electrode plate 122 may protrude more downward than the positive electrode plate 121 and the separator 123.

The separator 123 may be polyethylene (PE) or polypropylene (PP), but is not limited thereto in the present disclosure. The separator may prevent an electrical short between the positive electrode plate 121 and the negative electrode plate 122 and allow only the movement of lithium ions.

The positive electrode current collector plate 130 may be a circular metal plate shaped to correspond to the upper surface of the electrode assembly 120. A plane size of the positive electrode current collector plate 130 may be equal to or smaller than a size of an upper surface of the electrode assembly 120. The positive electrode current collector plate 130 may include aluminium, an aluminium alloy, nickel, a nickel alloy, copper, or a copper alloy. The positive electrode current collector plate 130 may be fixed and electrically connected to the positive electrode plate 121 exposed on the upper side of the electrode assembly 120 by welding in a state in which the lower surface thereof is in contact with the upper surface of the electrode assembly 120. The positive electrode current collector plate 130 may be fixed and electrically connected to the rivet terminal 150 by welding in a state in which the upper surface thereof is in contact with the lower surface of the rivet terminal 150. The positive electrode current collector plate 130 serves as a passage for current flow between the positive electrode plate 121 of the electrode assembly 120 and the rivet terminal 150.

The positive electrode current collector plate 130 includes a first body 131 and a first electrode welding portion 132.

The first body 131 may be provided in a substantially disc shape.

The first electrode welding portion 132 is partitioned inside the first body 131 through a first slit 135 and is welded to the electrode assembly 120.

The first electrode welding portion 132 is separated from the central region of the first body 131 of the current collector plate 130 by the first slit 135 to be movable. Here, the edge of the first body 131 and the first electrode welding portion 132 are maintained at a connected state. In addition, the electrode assembly 120 is welded to the inside of the electrode welding portion 132 partitioned by the first slit 135.

The first slit 135 may include a plurality of slits, which are arranged at a certain angle with respect to the center of the positive electrode current collector plate 130. Preferably, the first slit 135 may include an even number of slits, which are symmetrically arranged with respect to the center of the positive electrode current collector plate 130.

The first electrode welding portion 132 may include a first cantilever 133, a first center portion 134, and the first slit 135.

The first cantilever 133 may be provided in a form in which one end is fixed to the circumference of the first body 131 and the other end extending in the inward direction is free. In some examples, the shape of the first cantilever 133 may include a horseshoe shape in which one end has a relatively small width and the other end has a relatively large width. In addition, a plurality of positive electrode plates 121 may be welded along the length direction of the first cantilever 133. In some examples, a welding region (e.g., by a laser beam) may be provided along the longitudinal direction of the first cantilever 133. In some examples, the first cantilever 133 may include a plurality of first cantilevers, which are arranged outside the first center portion 134 at a certain angle. In some examples, the first cantilever 133 may include an even number of first cantilevers, which are symmetrically arranged outside the first center portion 134.

The first center portion 134 may be provided substantially at the center of the first body 131. The rivet terminal 150 of the cylindrical can 110 may be welded to the first center portion 134. In some examples, the first center portion 134 may be provided with a welding region (e.g., by resistance welding or ultrasonic welding).

The first slit 135 may be provided between the first body 131, the first cantilever 133, and the first center portion 134. In some examples, the shape of the first slit 135 may include a substantially C shape or a U shape. In some examples, the first slit 135 may be provided along the circumference of the first cantilever 133 or along the circumference of the first center portion 134. In some examples, the plurality of first slits 135 may be provided by being removed from a portion of the first body 131 by a laser beam, a cutter, or a punch.

The negative electrode current collector plate 140 may include a circular planar portion 141 corresponding to the lower surface of the electrode assembly 120 and an extending portion 142 extending downward from the edge of the flat portion 141. The upper surface of the planar portion 141 may be in contact with the lower surface of the electrode assembly 120. The upper surface of the may be fixed and electrically connected to the negative electrode plate 122 exposed to the lower portion of the electrode assembly 120 by welding in a state of being in contact with the lower surface of the electrode assembly 120.

The extending portion 142 may include a plurality of extending portions to be spaced apart from each other along the edge of the planar portion 141. In FIG. 5, an enlarged cross-sectional view is shown, illustrating a bottom portion of the cylindrical secondary battery 110 in a state in which the negative electrode current collector plate 140 is seated on the lower flat part 113b of the beading part 113 after the beading part 113 of the cylindrical can 110 is formed. As shown in FIG. 5, the extending portion 142 is shown as having four extending portions arranged to be symmetrical to each other with respect to the planar portion 141, but is not limited thereto in the present disclosure. The extending portion 142 may be bent downward from the edge of the planar portion 141 to extend. In addition, the extending portion 142 may contact the connecting part 113c of the beading part 113 and the inner surface of the lower flat part 113b. Here, the inner surface may be an inner surface of the cylindrical can 110. An end of the extending portion 142 may be located below the lower flat part 113b of the beading part 113. The extending portion 142 may be fixed and electrically connected to the cylindrical can 110 by being welded in a state of being in contact with the inner surface of the lower flat part 113b of the beading part 113. Therefore, the negative electrode current collector plate 140 serves as a current flow path between the negative electrode plate 122 and the cylindrical can 110 of the electrode assembly 120.

As shown in FIG. 5, the welding of the extending portion 142 and the beading part 113 may be performed in the direction of the extending portion 142, before the crimping part 114 of the cylindrical can 110 is formed, in a state in which the negative electrode current collector plate 140 is seated on the lower part of the beading part 113. Of course, the extending portion 142 and the beading part 113 may be welded to the extending portion 142 through the beading part 113 from the outside of the cylindrical can 110 after sealing the cylindrical can 110. Here, in order to prevent damage to the second gasket 170 due to welding, the second gasket 170 may further include a groove in a region corresponding to the welded portion.

The rivet terminal 150 may be inserted into the terminal hole 111a provided in the upper surface portion 111 of the cylindrical can 110 and electrically connected to the positive electrode current collector plate 130. The rivet terminal 150 may be made of the same or similar material as the positive electrode current collector plate 130 and the positive electrode plate 121. The rivet terminal 150 includes a head part 150a exposed upward from the cylindrical can 110 and a fastening part 150b welded and coupled to the first center portion 134 provided in the positive electrode current collector plate 130 through the terminal hole 111a so as to be located inside the cylindrical can 110. The rivet terminal 150 may be coupled to the terminal hole 111a of the upper surface portion 111 of the cylindrical can 110 from the bottom to the top, and then the head part 150a may be compressed and deformed (compression molded) by a processing method, such as press or spinning, to then be in close contact with the upper surface portion 111. Here, the first gasket 111b may be interposed between the rivet terminal 150 and the terminal hole 111a to electrically insulate the rivet terminal 150 and the cylindrical can 110 and seal the same. The rivet terminal 150 may be electrically connected to the positive electrode plate 121 of the electrode assembly 120 through the first center portion 134 of the first body 131 provided in the positive electrode current collector plate 130.

The cap plate 160 is a circular metal plate and may be coupled to the lower end of the cylindrical can 110. The cap plate 160 may be coupled to the lower end of the cylindrical can 110 in a state in which the second gasket 170 is interposed between the cylindrical can 110 and the cap plate 160, thereby preventing the cap plate 160 from being electrical connected to the cylindrical can 110. The cap plate 160 is not electrically connected to the negative electrode and the positive electrode of the electrode assembly 120, and thus may have no separate electrical polarity.

The cap plate 160 may be fixed by forming the crimping part 114 at the lower end of the cylindrical can 110 in a state in which the edge thereof is seated under the lower flat part 113b of the beading part 113 of the cylindrical can 110. Here, in a state in which the open bottom portion of the cylindrical can 110 faces upward, the cap plate 160 may be seated on the beading part 113.

More specifically, the cap plate 160 may be seated in a state in which the second gasket 170 is interposed under the lower flat part 113b of the cylindrical can 110. Thereafter, the crimping part 114 of the cylindrical can 110 may be bent toward the inside of the cap plate 160 to press the second gasket 170, and thus the cap plate 160 and the cylindrical can 110 are coupled to each other. Here, since the end of the negative electrode current collector plate 140 is located on the lower flat part 113b of the beading part 113, sealing of the cap plate 160 and the cylindrical can 110 may be more easily performed in a state in which the second gasket 170 is interposed therebetween. For example, in a case where the end of the negative electrode current collector plate 140 extends beyond the lower flat part 113b of the beading part 113, the end of the negative electrode current collector plate 140 may be cracked or broken, if, for sealing of the cap plate 160 and the cylindrical can 110, the second gasket 170 presses the crimping part 114. Therefore, sealing between the cap plate 160 and the cylindrical can 110 may not be easy.

The cap plate 160 may include at least one protruding portion 161 protruding downward. As an example, the protruding portion 161 of the cap plate 160 may be spaced apart from the center and may protrude downward to have a ring shape on a plane. As another example, the protruding portion 161 of the cap plate 160 may protrude downward so as to have a plurality of patterns. By including the protruding portion 161, the cap plate 160 may support the internal pressure of the cylindrical can 110. In addition, the lower surface of the protruding portion 161 of the cap plate 160 may be positioned higher than the lower surface of the crimping part 114 of the cylindrical can 110. That is, the crimping part 114 of the cylindrical can 110 may protrude more downward than the protruding portion 161 of the cap plate 160. Therefore, when the cylindrical secondary battery 100 is placed on a surface that is flat, the crimping part 114 of the cylindrical can 110 may be in contact with the surface, while the protruding portion 161 of the cap plate 160 may be spaced apart from the surface. In addition, since the crimping part 114 of the cylindrical can 110 protrudes more downward than the protruding portion 161 of the cap plate 160, even if the cap plate 160 expands due to the internal pressure of the cylindrical can 110, it is possible to prevent the cap plate 160 from being in contact with the surface. Therefore, the cylindrical secondary battery 100 can maintain the overall height even when the internal pressure of the cylindrical can 110 increases.

In addition, a notch 162 is formed in the cap plate 160 so as to be opened by a set pressure. When the internal pressure of the cylindrical can 110 exceeds a breaking pressure, the notch 162 may be broken to prevent the cylindrical secondary battery 100 from exploding. That is, when an excessive internal pressure is generated inside the cylindrical can 110, the notch 162 is broken, so that the excessive internal pressure can be discharged. The notch 162 of the cap plate 160 may be formed to be spaced apart from the center and may have a ring shape in a plan view. As another example, the notch 162 may be formed to have multiple patterns, and the shape of the notch 162 is not limited in the present disclosure.

In addition, the notch 162 may be formed to be spaced apart from the protruding portion 161. Preferably, the notch 162 may be provided in a concave portion 163 that is concavely formed in the direction of the cylindrical can 110 compared to the protruding portion 161, by not forming the protruding portion 161 in the cap plate 160. The cap plate 160 has unevenness by the concave portion 163 and the protruding portion 161, and thus can withstand the internal pressure even if the internal pressure of the cylindrical can 110 increases.

In addition, the cap plate 160 has a vent hole 164a through which electrolyte is injected. The electrode assembly 120 is inserted into the cylindrical can 110 in a state in which the open lower part of the cylindrical can 110 faces upward, and an electrolyte is injected through the vent hole 164a after the cap plate 160 is coupled to the open lower end of the cylindrical can 110. After the electrolyte injection is completed, the inside of the cylindrical can 110 is sealed by inserting the vent terminal 180 into the vent hole 164a from the bottom to the top. A third gasket 164b may be interposed between the vent hole 164a and the vent terminal 180 to bring the vent hole 164a and the vent terminal 180 into close contact with each other. The third gasket 164b may be made of a resin material, such as polyethylene (PE), polypropylene (PP), or polyethylene terephthalate (PET), to pressurize and seal the vent hole 164a and the vent terminal 180, and may prevent the vent terminal 180 from being separated from the vent hole 164a.

The second gasket 170 may be made of a resin material, such as polyethylene (PE), polypropylene (PP), or polyethylene terephthalate (PET) to pressurize and seal a portion between the cylindrical can 110 and the cap plate 160, and may prevent the cap plate 160 from being separated from the cylindrical can 110.

Since the cylindrical secondary battery 100 has both a negative electrode and a positive electrode provided on the upper surface thereof, in electrically connecting a plurality of cylindrical secondary batteries 100 through a bus bar, the plurality of cylindrical secondary batteries 100 have only to be connected at the upper surfaces thereof, thereby simplifying a bus bar connection structure.

FIGS. 4A and 4B are perspective views illustrating a welding region and a stress direction of a current collector plate in a secondary battery according to an embodiment of the present disclosure. Here, the positive electrode current collector plate 130 will be described as an example.

In the example shown in FIG. 4A, the positive electrode current collector plate 130 includes a plurality of first cantilevers 133 and a first center portion 134, and a welding region may be provided to each of the plurality of first cantilevers 133 and one first center portion 134. In some examples, the plurality of first cantilevers 133 may include welding regions along the longitudinal direction, and thus may be fixed to the plurality of positive electrode plates 121 of the electrode assembly 120. In some examples, the first center portion 134 may have a welding region provided at the center of the first center portion 134 to be fixed to the rivet terminal of the cylindrical can 110.

In FIG. 4B, arrows indicate stress directions. In the example shown in FIG. 4B, the first cantilevers 133 and the first center portion 134 of the positive electrode current collector plate 130 may move in opposite directions. For example, the first cantilevers 133 may move in a substantially downward direction, and the first center portion 134 may move in a substantially upward direction. This is because both the first cantilevers 133 and the first center portion 134 have one end fixed along the circumference of the first body 131. In other words, the first cantilevers 133 have one end fixed to the circumference of the first body 131, and the first center portion 134 has opposite regions fixed to the circumference of the first body 131, so that the first cantilevers 133 and the first center portion 134 may move in opposite directions. In other words, the movement of the first cantilevers 133 and the movement of the first center portion 134 do not interfere with each other. Therefore, separating phenomena of the welding regions provided to the first cantilevers 133 and the first center portion 134 are difficult to occur. Although not shown, the negative electrode current collector plate 140 is also designed in the same way as the positive electrode current collector plate 130 and can perform the same operation.

As described above, an embodiment of the present disclosure provides a secondary battery capable of preventing separation of a welding region between an electrode assembly and a current collector plate or separation of a welding region between a current collector plate and a can when vibration or impact is applied.

While the foregoing embodiment has been described to practice the secondary battery according to the present disclosure, it should be understood that the embodiment described herein should be considered in a descriptive sense only and not for purposes of limitation, and various changes in form and details may be made therein without departing from the scope of the disclosure as defined by the following claims.

## Claims

1. A secondary battery comprising:
an electrode assembly;
a case that accommodates the electrode assembly;
a cap plate that seals the case; and
at least one current collector plate that is welded to at least one of between the electrode assembly and the case and between the electrode assembly and the cap plate;
wherein at least one slit is formed in the current collector plate.

2. The secondary battery of claim 1, wherein the slit is C-shaped or U-shaped.

3. The secondary battery of claim 1 or claim 2, wherein the current collector plate comprises:
a disc-shaped body; and
an electrode welding portion that is partitioned inside the body by the slit and is welded to the electrode assembly.

4. The secondary battery of claim 3, wherein the electrode welding portion is separated from the central region of the body of the current collector plate by the slit to be movable.

5. The secondary battery of any one of claims 1 to 4, wherein the electrode assembly is welded to the inside of the electrode welding portion partitioned by the slit.

6. The secondary battery of any one of claims 1 to 5, wherein the slit includes a plurality of slits, which are arranged at a certain angle with respect to the center of the current collector plate.

7. The secondary battery of claim 6, wherein the slit includes an even number of slits, which are symmetrically arranged with respect to the center of the current collector plate.

8. The secondary battery of any one of claims 3 to 7, wherein the edge of the body and the electrode welding portion are maintained at a connected state.

9. The secondary battery of any one of claims 1 to 8, wherein the case accommodates the electrode assembly through an opening, has a hole on a surface facing the opening, and further comprises a first terminal electrically coupled to the current collector plate through the hole of the case.

10. The secondary battery of claim 9, wherein the first terminal includes a head part positioned outside the case and a fastening part that is welded and coupled to the central region of the current collector plate through the hole of the case.
